# EUROPEAN PATENT SPECIFICATION

(11) **EP 4 112 538 B1**
(45) Date of publication and mention of the grant of the patent: **11.10.2023**
(21) Application number: 22181822.2
(22) Date of filing: 29.06.2022
(51) Int. Cl.: C01B 3/02, C01B 3/50, C01B 25/027, C01B 32/40, C10J 3/08, C10K 1/02, C10K 1/04, C10K 1/06

(54) **SYSTEM FOR COMBINED PRODUCTION OF YELLOW PHOSPHORUS AND SYNGAS**
SYSTEM ZUR KOMBINIERTEN HERSTELLUNG VON GELBEM PHOSPHOR UND SYNTHESEGAS
SYSTÈME DE PRODUCTION COMBINÉE DE PHOSPHORE JAUNE ET DE GAZ DE SYNTHÈSE

(30) Priority: 30.06.2021 CN 202110735639
(43) Date of publication of application: 04.01.2023
(73) Proprietor: Kunming University Of Science And Technology, 650599 Kunming City Yunnan (CN)
(72) Inventor: MEI, Yi, Kunming City, 650599 (CN); ZHAI, Chi, Kunming City, 650599 (CN); NIE, Yunxiang, Kunming City, 650599 (CN); XIA, Jupei, Kunming City, 650599 (CN); XIE, Delong, Kunming City, 650599 (CN); ZHU, Yuanzhi, Kunming City, 650599 (CN); LONG, Ping, Kunming City, 650599 (CN)
(74) Representative: MERH-IP Matias Erny Reichl Hoffmann Patentanwälte PartG mbB

(56) References cited:
- CN-A- 111 363 591
- CN-A- 111 394 133
- CN-A- 111 548 019

## Description

### TECHNICAL FIELD

The present disclosure relates to the technical field of phosphorus and coal chemical industry, and in particular relates to a method of producing yellow phosphorus and syngas by coupling coal gasification with phosphate rock reduction reaction.

### BACKGROUND ART

Yellow phosphorus is an important chemical raw material, which is the basic product of medicines, pesticides, electronic chemicals and surfactants. At present, the industrial production method of yellow phosphorus is an electric furnace method, that is, the phosphate rock is reduced to elemental phosphorus by means of coke in a high-temperature electric furnace at 1,350 to 1,450 °C, the heat required for reducing the phosphate rock is from electric energy, the power consumption for producing 1 ton of yellow phosphorus is as high as 13,800 to 14,500 kWh, and the high-grade electric energy is used for supplying heat for the production of yellow phosphorus, resulting in that the system is low in available energy and limited by the electric furnace, electrodes and electric conductors. As the single phosphorus electric furnace has a yield of only 13 kt/a and a by-product furnace gas quantity of only 5,000 to 5,500 Nm³, it is difficult to realize large-scale utilization. Coal gasification, which is one of the most widely used and mature technologies in the coal chemical industry, is an important link in the synthesis of coal-based chemicals. In the coal gasification process, the temperature at the combustion zone of coal and pure oxygen is as high as 1,800 to 2,000 °C, and a large amount of cooling medium are required for discharging heat to maintain the heat balance of the system. Therefore, original two independent systems have the following problems: (1) the reduction of yellow phosphorus requires electrical energy for heat supply; (2) a large amount of heat generated in the coal gasification needs to be discharged; and (3) the total amount of CO produced by carbon reduction of phosphate rock is small and difficult to be used on a large scale. A patent document CN 111 363 591 discloses a device for co-producing yellow phosphorus and synthesis gas by reducing phosphate ore through pressurized gasification of phosphorus coal.

### SUMMARY

A technical problem to be solved by the present disclosure is how to provide a system for combined production of yellow phosphorus and syngas, which can improve available energy of yellow phosphorus production as well as production capacity of the yellow phosphorus and the yield of the syngas, and can reduce CO₂ emission.

The invention is set out in the appended set of claims. In particular, to solve the technical problem above, the technical solution adopted by the present disclosure is that: a system for combined production of yellow phosphorus and syngas comprises a phosphorus coal gasifier, wherein a discharge port of a pulverized coal preparation unit is connected to a pulverized coal inlet of the phosphorus coal gasifier and used for feeding pulverized coal into the phosphorus coal gasifier; a gas outlet of an air separation unit is connected to a gas inlet at the bottom of the phosphorus coal gasifier and used for feeding oxygen into the phosphorus coal gasifier;
a mineral aggregate forming unit is connected to a feeding port at the top of the phosphorus coal gasifier and used for conveying raw materials for production into the phosphorus coal gasifier; a furnace gas outlet of the phosphorus coal gasifier is connected to a gas inlet of a separating washing unit; one output port of the separating washing unit is a yellow phosphorus product output port, the other output port of the separating washing unit is a crude syngas output port, and the crude syngas output port is connected to an input port of a purification unit; refined syngas is output from an output port of the purification unit; a slag discharge port at the bottom of the phosphorus coal gasifier is connected to an input port of a slag cold quenching unit, and the slag is discharged from an output port of the slag cold quenching unit.

A further technical solution is that: the phosphorous coal gasifier is a fixed bed reactor, pure oxygen sprayed by the air separation unit and pulverized coal fed by the pulverized coal preparation unit are burnt at the lower part of the phosphorous coal gasifier by using a burner, thus forming a high-temperature coal gasification combustion zone at 1600 °C or above; and by taking the combustion zone as a boundary, massive phosphate rock ore, coke, silica or a spherical mixture of the three fed by the mineral aggregate forming unit are located at the upper part of the phosphorus coal gasifier, and the lower part of the phosphorus coal gasifier is a smelting zone for phosphate rock reduction, at which the phosphate rock undergoes reduction reaction at high temperature to generate yellow phosphorus; coal-gasified CO+H₂ and phosphorus steam gradually rise to the top from the bottom of the phosphorus coal gasification furnace and are fed into the separating washing unit from a gas guide pipe; and the furnace gas temperature is 300 to 700 °C, and the operating pressure is 1.5 to 3.5 MPa.

A further technical solution is that: the pure oxygen from the air separation unit and dry pulverized coal from the pulverized coal preparation unit enter the lower part of the phosphorus coal gasifier by means of the burner at a speed of 80 to 120 m/s for coal gasification reaction, a high-speed oxidation gas flow zone and a fixed bed at the upper section of the phosphorous coal gasifier form an arch interface to support solid mineral aggregates at the upper end, and high temperature formed by coal gasification enables phosphate rock and silica from the upper part to form an eutectic mixture in the oxidation gas flow zone.

A further technical solution is that: the raw materials for production in the mineral aggregate forming unit are phosphate rock, coke and silica which are added in the form of lump ore, or two or three of ground phosphate rock, coke powder and silica powder which are added in a pelletizing mode, and the raw materials are fed into the fixed bed at the upper section of the phosphorus coal gasifier through a stock bin after being dried.

A further technical solution is that: the process gas led out from the gas guide pipe at the top of the phosphorus coal gasifier sequentially enters the separating washing unit to separate phosphorus from crude syngas of CO and H₂, and the crude syngas containing CO and H₂ enters the purification unit to obtain refined qualified syngas.

A further technical solution is that: the pure oxygen and pulverized coal are burnt by the burner to form a high-temperature coal gasification combustion zone at 1600 °C or above, or the pure oxygen is introduced via the burner and then reacts with excessive carbon from the mineral aggregate forming unit to form a high-temperature coal gasification combustion zone at 1600 °C or above.

A further technical solution is that: the smelting zone employs high-temperature flue gas for liquid seal, liquid-phase slag discharging, and slag water quenching.

A further technical solution is that: the separating washing unit comprises a dust removal system and a yellow phosphorus condensation system; the furnace gas firstly enters the dust removal system, and the temperature of the furnace gas is kept higher than a dew point temperature of yellow phosphorus to achieve gas-solid separation, then the furnace gas after gas-solid separation enters the yellow phosphorus condensation system to obtain a yellow phosphorus product; the crude syngas containing CO and H₂ enters a purification work section for the removal of sulfur-containing compounds and trace phosphorus compounds, thus obtaining a syngas raw material meeting downstream product processing.

A further technical solution is that: a working flow of the pulverized coal preparation unit is as follows: raw material coal is ground in a coal mill by a grinding roller to reach a target particle size, the wet pulverized coal is dried by hot flue gas from an inert gas generator, and then the dried pulverized coal is brought into a rotary separator by hot inert gas; coarse particles are separated and then returned to the coal mill; the inert gas flow entrains fine-particle pulverized coal to enter a pulverized coal bag type dust remover in which the pulverized coal and the inert gas are subjected to gas-solid separation, and then qualified pulverized coal is conveyed to the phosphorus coal gasifier.

A further technical solution is that: the air separation unit is used for generating O₂ and N₂ and conveying the O₂ to the phosphorus coal gasifier to provide pure oxygen for the burner.

The beneficial effects generated by adopting the above technical solutions are that: compared with a traditional phosphorus electric furnace, the system uses primary energy, thus the heat energy utilization efficiency is high, and the energy cost for yellow phosphorus production is greatly reduced. The use of pressurized reaction not only improves the single-series production capacity of yellow phosphorus, but also significantly increases the total amount of co-produced syngas, which is conducive to the formation of industrial scale effects. For example, the phosphorus coal gasifier can co-produce 20,000 tons/year yellow phosphorus while providing syngas for 300,000 tons/year synthesis ammonia. The production and operation environments are improved by adopting a liquid-phase slag discharging and water quenching technology for lifting the flue gas. By means of dry dust removal, the dust content in the furnace gas is greatly reduced, generation of phosphorus sludge in the yellow phosphorus condensation process is completely eradicated, and a high-purity yellow phosphorus product is directly obtained.

### BRIEF DESCRIPTION OF THE DRAWINGS

The following describes the present disclosure in detail with reference to the accompanying drawings and specific embodiments.

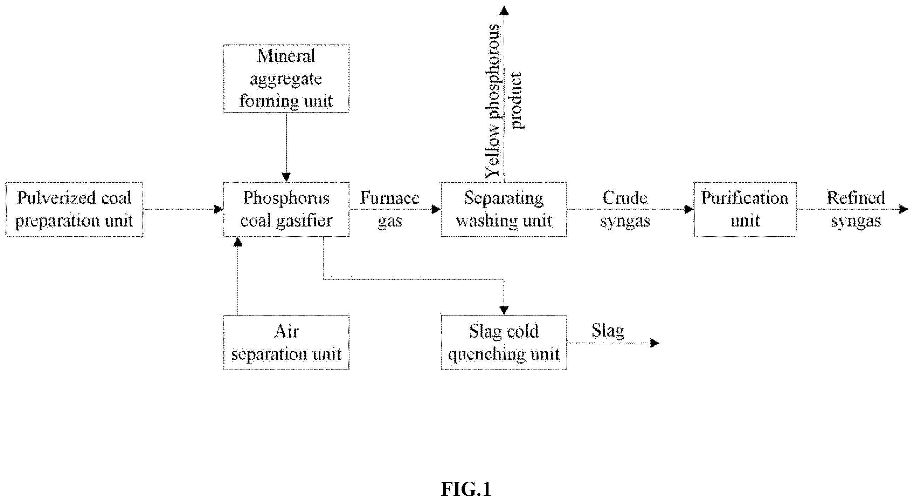

FIG. 1 is a functional block diagram of a system in accordance with an embodiment of the present disclosure.

### DETAILED DESCRIPTION OF THE EMBODIMENTS

The following clearly and completely describes the technical solutions in the embodiments of the present disclosure with reference to the accompanying drawings in the embodiments of the present invention. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

As shown in FIG. 1, an embodiment of the present disclosure discloses a system for combined production of yellow phosphorous and syngas, which comprises a phosphorus coal gasifier, wherein a discharge port of a pulverized coal preparation unit is connected to a pulverized coal inlet of the phosphorus coal gasifier and used for feeding pulverized coal into the phosphorus coal gasifier; a gas outlet of an air separation unit is connected to a gas inlet at the bottom of the phosphorus coal gasifier and used for feeding oxygen into the phosphorus coal gasifier; a mineral aggregate forming unit is connected to a feeding port at the top of the phosphorus coal gasifier and used for conveying raw materials for production into the phosphorus coal gasifier; a furnace gas outlet of the phosphorus coal gasifier is connected to a gas inlet of a separating washing unit; one output port of the separating washing unit is a yellow phosphorus product output port, the other output port of the separating washing unit is a crude syngas output port, and the crude syngas output port is connected to an input port of a purification unit; refined syngas is output from an output port of the purification unit; a slag discharge port at the bottom of the phosphorus coal gasifier is connected to an input port of a slag cold quenching unit, and the slag is discharged from an output port of the slag cold quenching unit.

Further, the phosphorous coal gasifier is a fixed bed reactor, pure oxygen sprayed by the air separation unit and pulverized coal fed by the pulverized coal preparation unit are burnt at the lower part of the phosphorous coal gasifier by using a burner, thus forming a high-temperature coal gasification combustion zone at 1600 °C or above; and by taking the combustion zone as a boundary, massive phosphate rock ore, coke, silica or a spherical mixture of the three fed by the mineral aggregate forming unit are located at the upper part of the phosphorus coal gasifier, and the lower part of the phosphorus coal gasifier is a smelting zone for phosphate rock reduction, at which the phosphate rock undergoes reduction reaction at high temperature to generate yellow phosphorus; coal-gasified CO+H₂ and phosphorus steam gradually rise to the top from the bottom of the phosphorus coal gasification furnace and are fed into the separating 217185EP washing unit from a gas guide pipe; and the furnace gas temperature is 300 to 700 °C, and the operating pressure is 1.5 to 3.5 MPa.

A pressurized fixed bed is adopted for a coupling reaction of the reduction of phosphate rock and coal gasification in the phosphorus coal gasifier, the phosphate rock, coke (coal) and silica enter from the top of the phosphorus coal gasifier, the temperature gradually rises along with descending of materials until the materials are in a smelted state, and the gas temperature of furnace gas at the top of the gasifier is about 500 °C.

A working flow of the pulverized coal preparation unit is as follows: raw material coal is ground in a coal mill by a grinding roller to reach a target particle size, the wet pulverized coal is dried by hot flue gas from an inert gas generator, and then the dried pulverized coal is brought into a rotary separator by hot inert gas; coarse particles are separated and then returned to the coal mill; the inert gas flow entrains fine-particle pulverized coal to enter a pulverized coal bag type dust remover in which the pulverized coal and the inert gas are subjected to gas-solid separation, and then qualified pulverized coal is conveyed to the phosphorus coal gasifier.

The pure oxygen from the air separation unit and dry pulverized coal from the pulverized coal preparation unit enter the lower part of the phosphorus coal gasifier by means of the burner at a speed of 80 to 120 m/s for coal gasification reaction, a high-speed oxidation gas flow zone and a fixed bed at the upper section of the phosphorous coal gasifier form an arch interface to support solid mineral aggregates at the upper end, and high temperature formed by coal gasification enables phosphate rock and silica from the upper part to form an eutectic mixture in the oxidation gas flow zone.

The raw materials for production in the mineral aggregate forming unit are phosphate rock, coke and silica which are added in the form of lump ore, or two or three of ground phosphate rock, coke powder and silica powder which are added in a pelletizing mode, and the raw materials enter the fixed bed at the upper section of the phosphorus coal gasifier through a stock bin after being dried.

The pure oxygen and pulverized coal are burnt by the burner to form a high-temperature coal gasification combustion zone at 1600 °C or above, or the pure oxygen is introduced via the burner and then reacts with excessive carbon from the mineral aggregate forming unit to form a high-temperature coal gasification combustion zone at 1600 °C or above.

The process gas led out from the gas guide pipe at the top of the phosphorus coal gasifier sequentially enters the separating washing unit to separate phosphorus from crude syngas of CO and H₂, and the crude syngas containing CO and H₂ enters the purification unit to obtain refined qualified syngas.

The smelting zone employs high-temperature flue gas for liquid seal, liquid-phase slag discharging, and slag water quenching. A slag pool receives liquid slag from the bottom of the fixed bed, the smelted slag enters a conical slag pool at the bottom of the phosphorus coal gasifier through a phosphate rock reduction melting pool for intermittent liquid-phase slag discharging, and the discharged slag enters a slag cold quenching pool and then is discharged after being subjected to water quenching.

The separating washing unit comprises a dust removal system and a yellow phosphorus condensation system. The furnace gas firstly enters the dust removal system, and the temperature of the furnace gas is kept higher than a dew point temperature of yellow phosphorus to achieve gas-solid separation, then the furnace gas after gas-solid separation enters the yellow phosphorus condensation system to obtain a yellow phosphorus product; the crude syngas containing CO and H₂ enters a purification work section for the removal of sulfur-containing compounds and trace phosphorus compounds, thus obtaining a syngas raw material meeting downstream product processing.

In accordance with the system, a reduction reaction system of the phosphate rock is introduced into the coal gasification process, the coal gasification and the phosphate rock reduction reaction are coupled in one gasification device, the heat generated in the coal gasification process is used for supplying heat for phosphate rock reduction, the use amount of cosolvents such as silica is reduced by using silicon and aluminum elements contained in coal ash, thereby increasing the yield of the phosphorus steam. The yellow phosphorus product is obtained by separating the phosphorus steam from CO+H₂, and the crude syngas is further purified to obtain refined syngas. In conclusion, the system can increase the available energy of the yellow production; the single-series yellow phosphorus production capacity and the syngas yield can be improved by means of pressurized conversion; an advanced coal gasification technology is introduced into the yellow phosphorus production process; the phosphorus coal gasifier can receive phosphate rocks of different qualities by means of forming treatment; and CO₂ emission can be reduced.

## Claims

1. A system for combined production of yellow phosphorous and syngas, comprising a phosphorus coal gasifier, wherein a discharge port of a pulverized coal preparation unit is connected to a pulverized coal inlet of the phosphorus coal gasifier and used for feeding pulverized coal into the phosphorus coal gasifier; a gas outlet of an air separation unit is connected to a gas inlet at the bottom of the phosphorus coal gasifier and used for feeding oxygen into the phosphorus coal gasifier; a mineral aggregate forming unit is connected to a feeding port at the top of the phosphorus coal gasifier and used for conveying raw materials for production into the phosphorus coal gasifier; a furnace gas outlet of the phosphorus coal gasifier is connected to a gas inlet of a separating washing unit; one output port of the separating washing unit is a yellow phosphorus product output port, the other output port of the separating washing unit is a crude syngas output port, and the system further characterized that the crude syngas output port is connected to an input port of a purification unit; refined syngas is output from an output port of the purification unit; a slag discharge port at the bottom of the phosphorus coal gasifier is connected to an input port of a slag cold quenching unit, and the slag is discharged from an output port of the slag cold quenching unit,
wherein the phosphorous coal gasifier is a fixed bed reactor, pure oxygen sprayed by the air separation unit and pulverized coal fed by the pulverized coal preparation unit are burnt at the lower part of the phosphorous coal gasifier by using a burner, thus forming a high-temperature coal gasification combustion zone at 1600 °C or above; and by taking the combustion zone as a boundary, massive phosphate rock ore, coke, silica or a spherical mixture of the three fed by the mineral aggregate forming unit are located at the upper part of the phosphorus coal gasifier, and the lower part of the phosphorus coal gasifier is a smelting zone for phosphate rock reduction, at which the phosphate rock undergoes reduction reaction at high temperature to generate yellow phosphorus; coal-gasified CO+H₂ and phosphorus steam gradually rise to the top from the bottom of the phosphorus coal gasification furnace and are fed into the separating washing unit from a gas guide pipe; and the furnace gas temperature is 300 to 700 °C, and the operating pressure is 1.5 to 3.5 MPa, and
wherein the smelting zone employs high-temperature flue gas for liquid seal, liquid-phase slag discharging and slag water quenching.

2. The system for combined production of yellow phosphorous and syngas according to claim 1, wherein the pure oxygen from the air separation unit and dry pulverized coal from the pulverized coal preparation unit enter the lower part of the phosphorus coal gasifier by means of the burner at a speed of 80 to 120 m/s for coal gasification reaction, a high-speed oxidation gas flow zone and a fixed bed at the upper section of the phosphorous coal gasifier form an arch interface to support solid mineral aggregates at the upper end, and high temperature formed by coal gasification enables phosphate rock and silica from the upper part to form an eutectic mixture in the oxidation gas flow zone.

3. The system for combined production of yellow phosphorous and syngas according to claim 1, wherein the raw materials for production in the mineral aggregate forming unit are phosphate rock, coke and silica which are added in the form of lump ore, or two or three of ground phosphate rock, coke powder and silica powder which are added in a pelletizing mode, and the raw materials enter the fixed bed at the upper section of the phosphorus coal gasifier through a stock bin after being dried.

4. The system for combined production of yellow phosphorous and syngas according to claim 1, wherein the process gas led out from the gas guide pipe at the top of the phosphorus coal gasifier sequentially enters the separating washing unit to separate phosphorus from crude syngas of CO and H₂, and the crude syngas containing CO and H₂ enters the purification unit to obtain refined qualified syngas.

5. The system for combined production of yellow phosphorous and syngas according to claim 1, wherein the pure oxygen and pulverized coal are burnt by the burner to form a high-temperature coal gasification combustion zone at 1600 °C or above, or the pure oxygen is introduced via the burner and then reacts with excessive carbon from the mineral aggregate forming unit to form a high-temperature coal gasification combustion zone at 1600 °C or above.

6. The system for combined production of yellow phosphorous and syngas according to claim 1, wherein the separating washing unit comprises a dust removal system and a yellow phosphorus condensation system; the furnace gas firstly enters the dust removal system, and the temperature of the furnace gas is kept higher than a dew point temperature of yellow phosphorus to achieve gas-solid separation, then the furnace gas after gas-solid separation enters the yellow phosphorus condensation system to obtain a yellow phosphorus product; the crude syngas containing CO and H₂ enters a purification work section for the removal of sulfur-containing compounds and trace phosphorus compounds, thus obtaining a syngas raw material meeting downstream product processing.

7. The system for combined production of yellow phosphorous and syngas according to claim 1, wherein the working flow of the pulverized coal preparation unit is as follows: raw material coal is ground in a coal mill by a grinding roller to reach a target particle size, the wet pulverized coal is dried by hot flue gas from an inert gas generator, and then the dried pulverized coal is brought into a rotary separator by hot inert gas; coarse particles are separated and then returned to the coal mill; the inert gas flow entrains fine-particle pulverized coal to enter a pulverized coal bag type dust remover in which the pulverized coal and the inert gas are subjected to gas-solid separation, and then qualified pulverized coal is conveyed to the phosphorus coal gasifier.

8. The system for combined production of yellow phosphorous and syngas according to claim 1, wherein the air separation unit is used for generating O₂ and N₂ and conveying the O₂ to the phosphorus coal gasifier to provide pure oxygen for the burner.

## Patentansprüche

1. System zur kombinierten Herstellung von gelbem Phosphor und Synthesegas, das einen Phosphorkohlevergaser umfasst, wobei
eine Auslassöffnung einer Kohlenstaubaufbereitungseinheit mit einem Kohlenstaubeinlass des Phosphorkohlevergasers verbunden ist und zum Zuführen von Kohlenstaub in den Phosphorkohlevergaser verwendet wird;
ein Gasauslass einer Luftzerlegungseinheit ist mit einem Gaseinlass am Boden des Phosphorkohlevergasers verbunden und wird zur Zufuhr von Sauerstoff in den Phosphorkohlevergaser verwendet;
eine Mineralaggregatbildungseinheit ist mit einer Zufuhröffnung am oberen Ende des Phosphorkohlevergasers verbunden und wird zur Förderung von Rohmaterialien für die Produktion in den Phosphorkohlevergaser verwendet;
ein Ofengasauslass des Phosphorkohlevergasers mit einem Gaseinlass einer Trennwascheinheit verbunden ist;
eine Ausgangsöffnung der Trennwascheinheit eine Ausgangsöffnung für gelbes Phosphorprodukt ist, die andere Ausgangsöffnung der Trennwascheinheit eine Ausgangsöffnung für rohes Synthesegas ist, und
das System ferner **dadurch gekennzeichnet ist, dass**:
die Ausgangsöffnung für rohes Synthesegas mit einer Eingangsöffnung einer Reinigungseinheit verbunden ist;
gereinigtes Synthesegas aus einer Ausgangsöffnung der Reinigungseinheit ausgegeben wird;
eine Schlackenauslassöffnung am Boden des Phosphorkohlevergasers mit einer Eingangsöffnung einer Schlackenkaltlöscheinheit verbunden ist und die Schlacke aus einer Ausgangsöffnung der Schlackenkaltlöscheinheit ausgelassen wird, wobei
der Phosphorkohlevergaser ein Festbettreaktor ist, reiner Sauerstoff, der von der Luftzerlegungseinheit versprüht wird, und Kohlenstaub, der von der Kohlenstaubaufbereitungseinheit zugeführt wird, im unteren Teil des Phosphorkohlevergasers unter Verwendung eines Brenners verbrannt werden, wodurch eine Hochtemperatur-Kohlevergasungs-Verbrennungszone bei 1600 °C oder darüber gebildet wird; und
indem man die Verbrennungszone als Grenze nimmt, befinden sich massives Phosphatgestein, Koks, Siliziumdioxid oder eine kugelförmige Mischung dieser drei Elemente, die von der Mineralaggregatbildungseinheit zugeführt werden, im oberen Teil des Phosphorkohlevergasers, und der untere Teil des Phosphorkohlevergasers eine Schmelzzone für die Phosphatgesteinreduktion aufweist, in der das Phosphatgestein eine Reduktionsreaktion bei hoher Temperatur erfährt, um gelben Phosphor zu erzeugen;
kohlevergastes CO+H₂ und Phosphordampf allmählich vom Boden des Phosphorkohlevergasungsofens nach oben aufsteigen und über ein Gasführungsrohr in die Trennwascheinheit geleitet werden; und
die Temperatur des Ofengases 300 bis 700 °C beträgt, und der Betriebsdruck 1. 5 bis 3,5 MPa beträgt, und wobei
die Schmelzzone Hochtemperatur-Rauchgas für die Flüssigkeitsabdichtung, den Flüssigphasen-Schlackenaustrag und die Schlackenwasserabschreckung verwendet.

2. System zur kombinierten Herstellung von gelbem Phosphor und Synthesegas nach Anspruch 1, wobei
der reine Sauerstoff aus der Luftzerlegungseinheit und trockene Kohlenstaub aus der Kohlenstaubaufbereitungseinheit unter Verwendung des Brenners mit einer Geschwindigkeit von 80 bis 120 m/s in den unteren Teil des Phosphorkohlevergasers zur Kohlevergasungsreaktion eintritt,
eine Hochgeschwindigkeits-Oxidationsgas-Strömungszone und ein Festbett im oberen Teil des Phosphorkohlevergasers eine gewölbte Grenzfläche bilden, um feste mineralische Aggregate am oberen Ende zu stützen, und
die durch die Kohlevergasung erzeugte hohe Temperatur es ermöglicht, dass Phosphatgestein und Siliziumdioxid aus dem oberen Teil eine eutektische Mischung in der Oxidationsgas-Strömungszone bilden.

3. System zur kombinierten Herstellung von gelbem Phosphor und Synthesegas nach Anspruch 1, wobei
die Rohstoffe für die Herstellung in der Mineralaggregatbildungseinheit Phosphatgestein, Koks und Siliciumdioxid sind, die in Form von Stückerz zugegeben werden, oder zwei oder drei gemahlene Phosphatgestein, Kokspulver und Siliciumdioxidpulver sind, die in Form von Pellets zugegeben werden, und
die Rohstoffe nach dem Trocknen durch einen Vorratsbehälter in das Festbett im oberen Teil des Phosphorkohlevergasers gelangen.

4. System zur kombinierten Herstellung von gelbem Phosphor und Synthesegas nach Anspruch 1, wobei
das aus dem Gasführungsrohr am oberen Ende des Phosphorkohlevergasers herausgeführte Prozessgas nacheinander in die Trennwascheinheit eintritt, um Phosphor von rohem CO- und H₂-Synthesegas abzutrennen, und
das CO- und H₂-haltige rohe Synthesegas in die Reinigungseinheit eintritt, um gereinigtes qualifiziertes Synthesegas zu erhalten.

5. System zur kombinierten Herstellung von gelbem Phosphor und Synthesegas nach Anspruch 1, wobei
der reine Sauerstoff und die pulverisierte Kohle unter Verwendung des Brenners verbrannt werden, um eine Hochtemperatur-Kohlevergasungs-Verbrennungszone bei 1600 °C oder darüber zu bilden, oder
der reine Sauerstoff über den Brenner eingeleitet wird und dann mit überschüssigem Kohlenstoff aus der Mineralaggregatbildungseinheit reagiert, um eine Hochtemperatur-Kohlevergasungs-Verbrennungszone bei 1600 °C oder darüber zu bilden.

6. System zur kombinierten Herstellung von gelbem Phosphor und Synthesegas nach Anspruch 1, wobei
die Trennwascheinheit ein System zur Staubentfernung und ein System zur Kondensation von gelbem Phosphor umfasst;
das Ofengas zuerst in das System zur Staubentfernung eintritt und die Temperatur des Ofengases höher als die Taupunkttemperatur des gelben Phosphors gehalten wird, um eine Gas-Feststoff-Trennung zu erreichen, dann das Ofengas nach der Gas-Feststoff-Trennung in das System zur Kondensation von gelbem Phosphor eintritt, um ein gelbes Phosphorprodukt zu erhalten;
das rohe Synthesegas, das CO und H₂ enthält, in einen Reinigungsabschnitt eintritt, um schwefelhaltige Verbindungen und Spuren von Phosphorverbindungen zu entfernen, wodurch ein Synthesegas-Rohmaterial erhalten wird, das der nachgeschalteten Produktverarbeitung genügt.

7. System zur kombinierten Herstellung von gelbem Phosphor und Synthesegas nach Anspruch 1, wobei
der Arbeitsablauf der Kohlenstaubaufbereitungseinheit wie folgt ist:
Rohmaterialkohle wird in einer Kohlemühle durch eine Mahlwalze gemahlen, um eine Zielpartikelgröße zu erreichen,
die nasse pulverisierte Kohle durch heißes Rauchgas aus einem Inertgasgenerator getrocknet wird, und dann die getrocknete pulverisierte Kohle durch heißes Inertgas in einen Rotationsabscheider gebracht wird;
grobe Partikel abgeschieden und dann in die Kohlemühle zurückgeführt werden;
der Inertgasstrom feinteiligen Kohlenstaub erfasst und führt ihn in einen Kohlenstaub-Sackentstauber führt, in dem der Kohlenstaub und das Inertgas einer Gas-Feststoff-Trennung unterzogen werden, und anschließend der qualifizierte Kohlenstaub zum Phosphorkohlevergaser befördert wird.

8. System zur kombinierten Herstellung von gelbem Phosphor und Synthesegas nach Anspruch 1, wobei
die Luftzerlegungseinheit zur Erzeugung von O₂ und N₂ und zur Beförderung des O₂ zum Phosphorkohlevergaser verwendet wird, um reinen Sauerstoff für den Brenner bereitzustellen.

## Revendications

1. Système pour la production combinée de phosphore jaune et de gaz de synthèse, comprenant un gazéifieur de charbon - phosphore, dans lequel l'orifice d'évacuation d'une unité de préparation de charbon pulvérisé est relié à une entrée de charbon pulvérisé du gazéifieur de charbon - phosphore et utilisé pour alimenter le charbon pulvérisé dans le gazéifieur de charbon - phosphore ; une sortie de gaz d'une unité de séparation d'air est reliée à une entrée de gaz au niveau du fond du gazéifieur de charbon - phosphore et utilisée pour alimenter de l'oxygène dans le gazéifieur de charbon - phosphore ; une unité de formation d'agrégat minéral est reliée à un orifice d'alimentation au niveau du haut du gazéifieur de charbon - phosphore et utilisée pour transporter des matières premières destinées à la production dans le gazéifieur de charbon - phosphore ; une sortie de gaz de four du gazéifieur de charbon - phosphore est reliée à une entrée de gaz d'une unité de séparation - lavage ; un orifice de sortie de l'unité de séparation - lavage est un orifice de sortie du produit de phosphore jaune, l'autre orifice de sortie de l'unité de séparation - lavage est un orifice de sortie de gaz de synthèse brut, et le système est en outre **caractérisé en ce que** l'orifice de sortie de gaz de synthèse brut est relié à un orifice d'entrée d'une unité de purification ; le gaz de synthèse raffiné est sorti à partir d'un orifice de sortie de l'unité de purification ; un orifice d'évacuation de laitier au niveau du fond du gazéifieur de charbon - phosphore est relié à un orifice d'entrée d'une unité de trempe froide de laitier, et le laitier est évacué d'un orifice de sortie de l'unité de trempe froide de laitier,
dans lequel le gazéifieur de charbon - phosphore est un réacteur à lit fixe, de l'oxygène pur pulvérisé par l'unité de séparation d'air et du charbon pulvérisé alimenté par l'unité de préparation de charbon pulvérisé sont brûlés au niveau de la partie inférieure du gazéifieur de charbon - phosphore en utilisant un brûleur, formant ainsi une zone de combustion à gazéification de charbon à haute température à 1600°C ou plus ; et en prenant la zone de combustion comme limite, du minerai de roche phosphatée massive, du coke, de la silice ou un mélange sphérique des trois, alimenté par l'unité de formation d'agrégat minéral, sont positionnés au niveau de la partie supérieure du gazéifieur de charbon - phosphore, et la partie inférieure du gazéifieur de charbon - phosphore est une zone de fusion pour la réduction de la roche phosphatée, au niveau de laquelle la roche phosphatée subit une réaction de réduction à haute température pour générer du phosphore jaune ; du CO+H₂ obtenu par gazéification de charbon et de la vapeur de phosphore s'élèvent vers le haut depuis le fond du four de gazéification de charbon - phosphore et sont alimentés dans l'unité de séparation - lavage à partir d'un tuyau de guidage de gaz ; et la température de gaz de four est de 300 à 700°C, et la pression d'exploitation est de 1,5 à 3,5 MPa, et
dans lequel la zone de fusion utilise un gaz de fumée à haute température pour le joint liquide, l'évacuation du laitier en phase liquide et la trempe aqueuse du laitier.

2. Système pour la production combinée de phosphore jaune et de gaz de synthèse selon la revendication 1, dans lequel de l'oxygène pur provenant de l'unité de séparation d'air et du charbon sec pulvérisé provenant de l'unité de préparation de charbon pulvérisé entrent dans la partie inférieure du gazéifieur de charbon - phosphore au moyen du brûleur à une vitesse de 80 à 120 m/s pour la réaction de gazéification du charbon, une zone d'écoulement de gaz d'oxydation à haute vitesse et un lit fixe au niveau de la section supérieure du gazéifieur de charbon - phosphore forment une interface arquée pour supporter des agrégats minéraux solides au niveau de l'extrémité supérieure, et une haute température formée par la gazéification du charbon permet à la roche phosphatée et à la silice provenant de la partie supérieure de former un mélange eutectique dans la zone d'écoulement du gaz d'oxydation.

3. Système pour la production combinée de phosphore jaune et de gaz de synthèse selon la revendication 1, dans lequel les matières premières destinées à la production dans l'unité de formation d'agrégat minéral sont de la roche phosphatée, du coke et de la silice qui sont ajoutés sous la forme de minerai en morceaux, ou deux ou trois éléments parmi la roche phosphatée de sol, la poudre de coke et la poudre de silice qui sont ajoutées en mode de granulation, et les matières premières entrent dans le lit fixe au niveau de la section supérieure du gazéifieur de charbon - phosphore en passant par un silo de stockage après avoir été séchées.

4. Système pour la production combinée de phosphore jaune et de gaz de synthèse selon la revendication 1, dans lequel le gaz de process conduit hors du tuyau de guidage de gaz au niveau du haut du gazéifieur de charbon - phosphore entre séquentiellement dans l'unité de séparation - lavage pour séparer le phosphore du gaz de synthèse brut de CO et de H₂, et le gaz de synthèse brut contenant le CO et H₂ entre dans l'unité de purification afin d'obtenir du gaz de synthèse qualifié raffiné.

5. Système pour la production combinée de phosphore jaune et de gaz de synthèse selon la revendication 1, dans lequel de l'oxygène pur et du charbon pulvérisé sont brûlés par le brûleur pour former une zone de combustion à gazéification du charbon à haute température à 1600°C ou plus, ou de l'oxygène pur est introduit par l'intermédiaire du brûleur et ensuite mis à réagir avec du carbone en excédent provenant de l'unité de formation d'agrégat minéral afin de former une zone de combustion à gazéification du charbon à haute température à 1600°C ou plus.

6. Système pour la production combinée de phosphore jaune et de gaz de synthèse selon la revendication 1, dans lequel l'unité de séparation - lavage comprend un système d'élimination des poussières et un système de condensation du phosphore jaune ; le gaz de four entre d'abord dans le système d'élimination des poussières, et la température du gaz de four est maintenue à un niveau plus élevé qu'une température de point de rosée du phosphore jaune afin d'effectuer la séparation gaz-solide, puis le gaz de four après séparation gaz-solide entre dans le système de condensation du phosphore jaune pour obtenir un produit de phosphore jaune ; le gaz de synthèse brut contenant du CO et du H₂ entre dans une section de travail de purification pour l'élimination des composés soufrés et des composés de phosphore traces, ce qui permet d'obtenir une matière première de gaz de synthèse rencontrant le traitement de produit en aval.

7. Système pour la production combinée de phosphore jaune et de gaz de synthèse selon la revendication 1, dans lequel le flux de travail de l'unité de préparation de charbon pulvérisé est le suivant : la matière première de charbon est broyée dans un broyeur à charbon par des rouleaux de broyage afin d'atteindre une taille de particule cible, le charbon pulvérisé humide est séché par le gaz de fumée chaud provenant d'un générateur de gaz inerte, et puis le charbon pulvérisé séché est amené dans un séparateur rotatif par le gaz inerte chaud ; les particules grossières sont séparées et puis renvoyées dans le broyeur à charbon ; le flux de gaz inerte entraîne le charbon pulvérisé en fines particules pour qu'il entre dans un éliminateur de poussières de type sac de charbon pulvérisé dans lequel le charbon pulvérisé et le gaz inerte sont soumis à une séparation gaz-solide, et puis le charbon pulvérisé qualifié est transporté au gazéifieur de charbon - phosphore.

8. Système pour la production combinée de phosphore jaune et de gaz de synthèse selon la revendication 1, dans lequel l'unité de séparation d'air est utilisée pour générer du O₂ et du N₂ et transporter le O₂ vers le gazéifieur de charbon - phosphore afin de fournir de l'oxygène pur au brûleur.
